# EUROPEAN PATENT APPLICATION

(11) **EP 2 638 831 A2**
(43) Date of publication of application: **18.09.2013**
(21) Application number: 13155842.1
(22) Date of filing: 19.02.2013
(51) Int. Cl.: A47G 19/30, B65D 83/00

(54) **Device for easily removing products from vessels**

(30) Priority: 27.02.2012 IT MI20120077 U
(71) Applicant: Casalino, Massimo, 22040 Alzate Brianza (CO) (IT)
(72) Inventor: Casalino, Massimo, 22040 Alzate Brianza (CO) (IT)
(74) Representative: Cicogna, Franco

(57) **Abstract**

A device for easily removing a product from a vessel comprises a rod (15)associated with a flexible supporting element (16,17) adapted to be introduced into a vessel (2) containing a product either immersed or not in a liquid, said flexible supporting element (16,17) having such an arrangement as to fit an inner portion of the vessel (2), said rod including (15), at a free end portion thereof, a gripping element (18) for raising said device to facilitate a removal of a product while draining off the liquid.

## Description

### BACKGROUND OF THE INVENTION

The present invention relates to a device for easily removing products from vessels or jars.

More specifically, the inventive device has been specifically designed for removing loose or sliced products from related vessels or jars.

As is known, for removing from a jar loose or sliced products preserved in a liquid, typically oil, it is necessary to use a removing tool, such as a fork or spoon, by introducing the latter into the vessel to remove the contents.

The above operation is affected by a lot of per se evident drawbacks.

In fact, the gripping tool or fork/spoon must be partially or fully immersed into the liquid, thereby it becomes dirty.

Moreover, the removal of sliced products is usually carried out by piercing them by a fork, thereby the product slice is frequently broken.

Moreover, for removing the slices it is frequently necessary to turn over the vessel, thereby causing liquid contained therein to leak out.

Furthermore, the removal of loose products, when the vessel is in a nearly empty condition, is difficult since it is necessary to precisely follow and grip the product pieces which move away through the liquid on the bottom of the vessel.

In addition, the product is held immersed in the liquid up to the time of its removal, thereby it is wetted by said liquid.

Thus, with the product a portion of liquid is removed, thereby the liquid level will become insufficient over time to properly cover the remaining products, thus preventing the latter from being properly preserved.

### SUMMARY OF THE INVENTION

Accordingly, the aim of the present invention is to provide such a product removal device allowing to take a product immersed in a liquid contained in a vessel, while overcoming the above mentioned drawbacks.

Within the scope of the above mentioned aim, a main object of the invention is to provide such a device particularly useful for removing sliced products, such as tuna and mackerel slices, as well as loose products, such as mushrooms, artichokes and the like, preserved in oil jars.

Another object of the present invention is to provide such a removal device adapted to easily remove any desired type of products immersed or not immersed in a liquid contained in a jar.

Another object of the present invention is to provide such a removal device which may be easily integrated in packaging oil preserved food products and the like.

Yet another object of the present invention is to provide such a removal device which, owing to its specifically designed features, is very reliable and safe in operation.

According to one aspect of the present invention, the above mentioned aim and objects, as well as yet other objects which will become more apparent hereinafter, are achieved by a removal device adapted to allow a product to be easily removed from a vessel, **characterized in that** said device comprises a rod associated with a flexible supporting element adapted to be introduced into a vessel containing a product immersed in a liquid.

The product to be removed may also be contained in a vessel or jar without liquid.

Said flexible supporting element is so arranged as to fit the inner portion of the vessel, said rod having, at its free end portion, a gripping element.

Said gripping element allows to raise the product taking device while preventing liquid from leaking out.

### BRIEF DESCRIPTION OF THE DRAWINGS

Further characteristics and advantages of the present invention will become more apparent hereinafter from the following disclosure of a preferred, though not exclusive, embodiment of the invention which is illustrated, by way of an indicative but not limitative example, in the accompanying drawings, where:

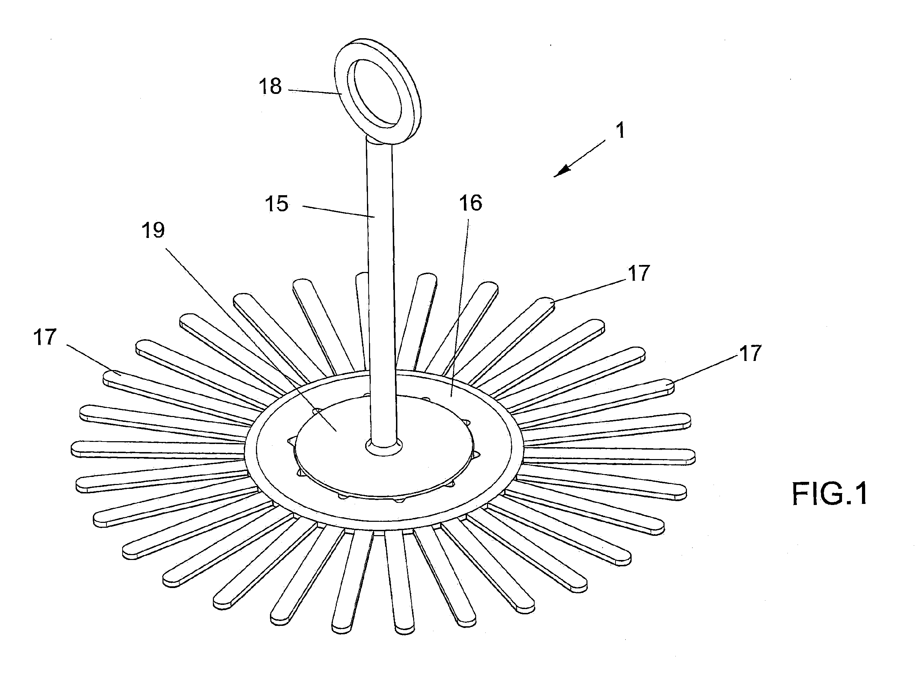

Figure 1 is a perspective view of the device according to the present invention, being shown with the blades thereof at an extended position, before inserting it into the vessel;
Figure 2 is a perspective view of the device showing the device as it is introduced into a vessel;
Figure 3 is a cross-sectional view of the device, showing the device as it is introduced into a vessel;
Figure 4 is a perspective view of the device, showing the device as introducing sliced products into a vessel;
Figure 5 is a cross-sectional view of the device, shown as introducing sliced products into a vessel;
Figure 6 is a perspective view of the device with the product slices, in a fully inserted condition in a vessel and with a closed cover;
Figure 7 is a cross-sectional view of the device with the product slices, in a fully inserted condition in a vessel and with a closed cover;
Figure 8 is a perspective view of the device, shown in the product removal operating step together with the sliced product;
Figure 9 is a front view of the device, shown together with the sliced product in the product removal operating step;
Figure 10 is a perspective view of the device, shown after a full removal operation, together with the sliced product;
Figure 11 is a cross-sectional view of the device, shown after a full removal operation, together with the sliced product;
Figure 12 is a perspective view of the device, shown in a fully inserted condition in a vessel with a loose product and a closed cover;
Figure 13 is a cross-sectional view of the device, shown as fully inserted in a vessel with the loose product and a closed cover;
Figure 14 is a perspective view of the device, shown during the removal operating step of a loose product;
Figure 15 is a cross-sectional view of the device, shown during a loose product removal operating step;
Figure 16 is a perspective view of the device, in a disc embodiment thereof, according to the present invention;
Figure 17 is a perspective view, tilted with respect to Figure 16, of the disc device;
Figure 18 is a perspective view of a further embodiment of the disc device;
Figure 19 is a perspective view of another embodiment of the disc device;

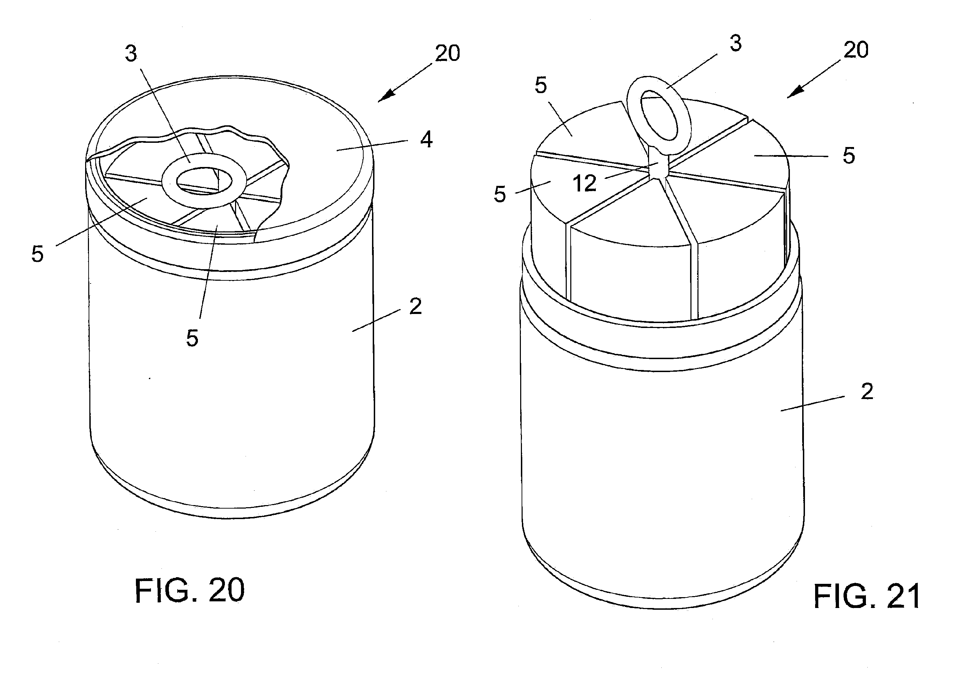

Figure 20 is a partially broken-away perspective view of a closed vessel, containing a sliced product;
Figure 21 is a perspective view showing the vessel of Figure 20, in an open position and with the product partially removed or withdrawn therefrom;

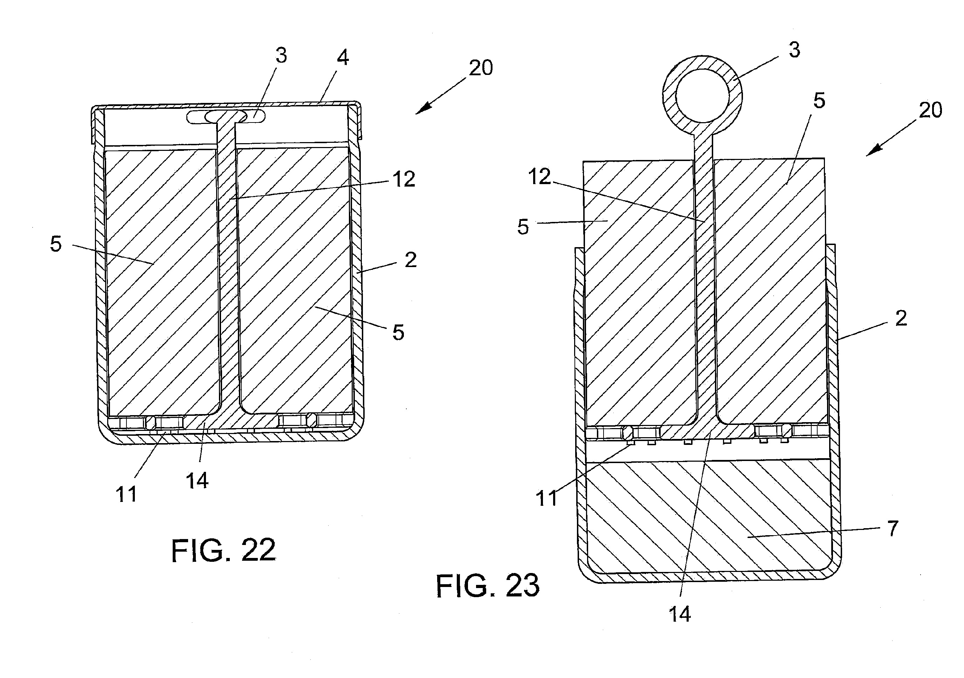

Figure 22 is a cross-sectional view of the vessel of Figure 21, in a closed position;
Figure 23 is a cross-sectional view of the vessel of Figure 22, in an open position, and with the product being partially withdrawn;

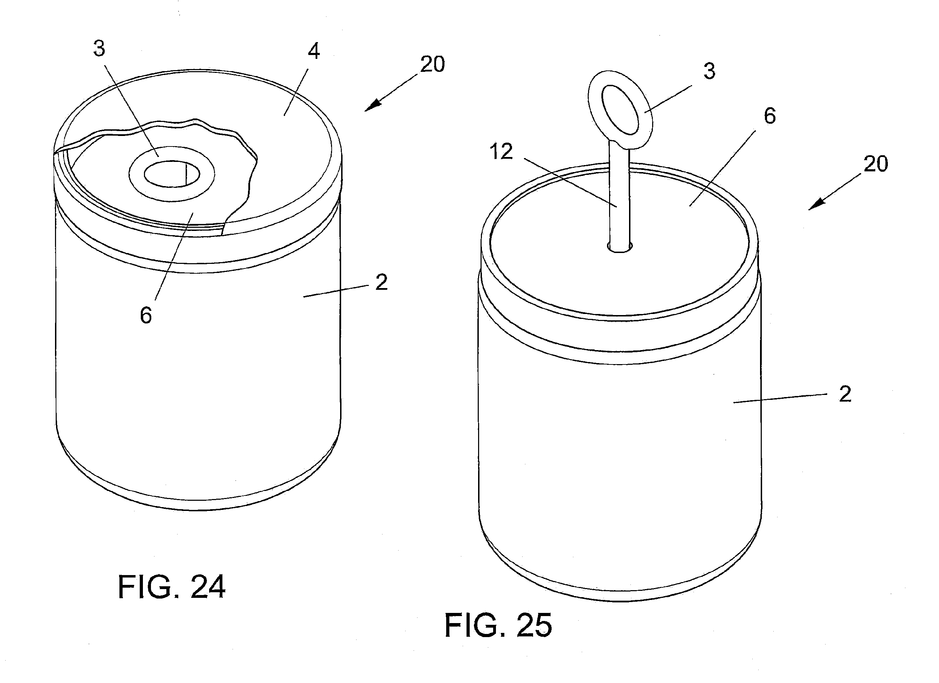

Figure 24 is a partially broken-away perspective view of the closed vessel, containing a loose product;
Figure 25 is a perspective view showing the vessel of Figure 24, in an open position, during a product withdrawing operating step;

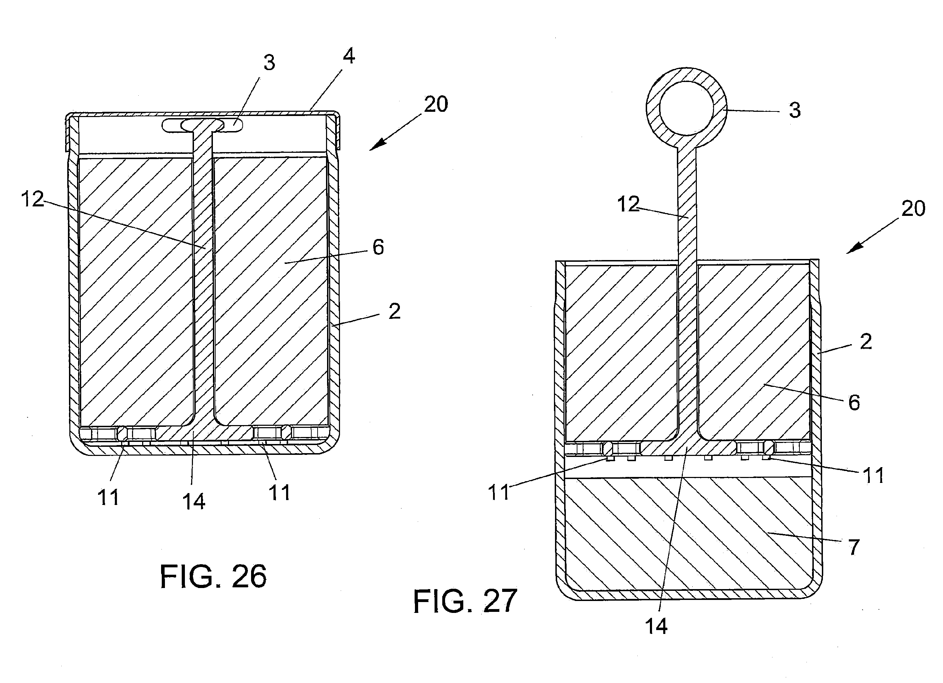

Figure 26 is a cross-sectional view of the vessel of Figure 25, in a closed position thereof;
Figure 27 is a cross-sectional view of the vessel of Figure 26, in an open position thereof, during the product withdrawal or removal operating step.

### DESCRIPTION OF THE PREFERRED EMBODIMENTS

With reference to the number references of the above mentioned figures, the removal device for removing and withdrawing a product from a vessel, according to the present invention, which has been generally indicated by the reference number 1, comprises a rod 15 associated with a crown 16 including a plurality of flexible blades 17, having a size larger than that of the vessel or jar 2 in which the inventive device is used.

The device according to the present invention is preferably made of two or more device pieces.

The rod 15 comprises, at a free end portion thereof, a ring 18 or other gripping element.

The end portion of the rod 15 associated with the crown 16 comprises a disc 19, made as a single piece with said rod.

The disc 19 and crown 16 may be made integrally with one another and the rod 15 as another discrete piece.

The preferred though not exclusive embodiment of the device shown in the Figures may be made starting from one or more pieces having any desired size and shape and joined by any desired joining method or system.

The making and assembling of the two-piece device, including the rod 15 with the disc 19 and crown 16 with the blades 17, are much more inexpensive than a making of the device as a single piece.

Moreover, the volume occupied by the separated or discrete pieces, that is not assembled with one another, will be much less, with a self evident advantage in their handling and shipment.

Advantageously, the device 1 is made of polypropylene, which, as is known, is a material well suitable for food use.

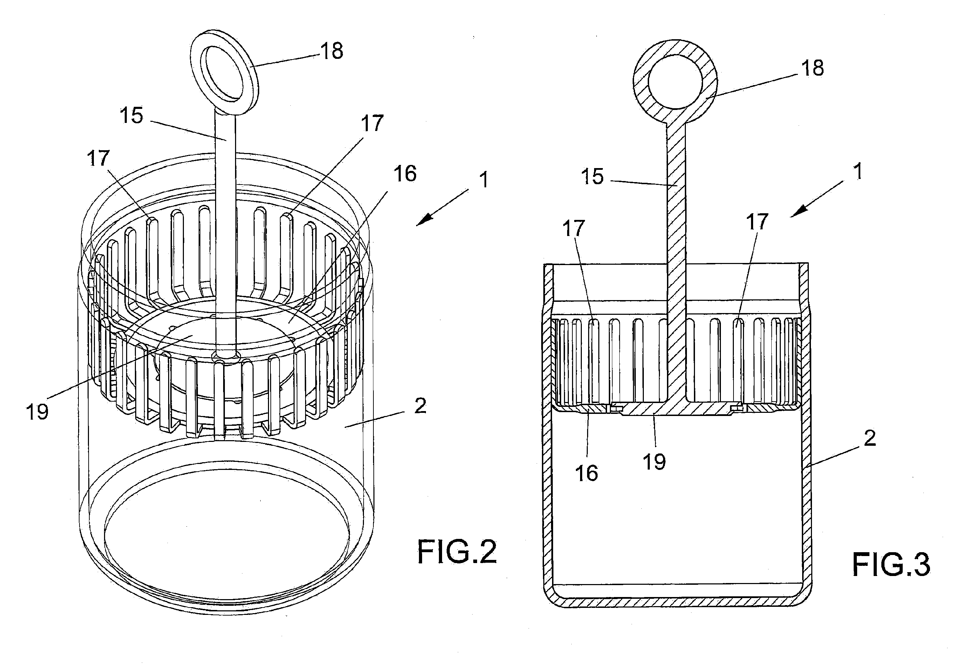

During the insertion of the device 1 into the vessel 2, as shown in Figures 2 and 3, the blades 17 are so folded as to adhere to the wall of the vessel 2, to increase the friction therewith, thereby the device may remain in a easily raised condition, at an intermediate position, without applying an outer force.

The flexible blades 17, in contact with the walls of the vessel 2, provide the device 1 with a greater stability, thereby it may be inclined without falling and loosing its equilibrium intermediate position.

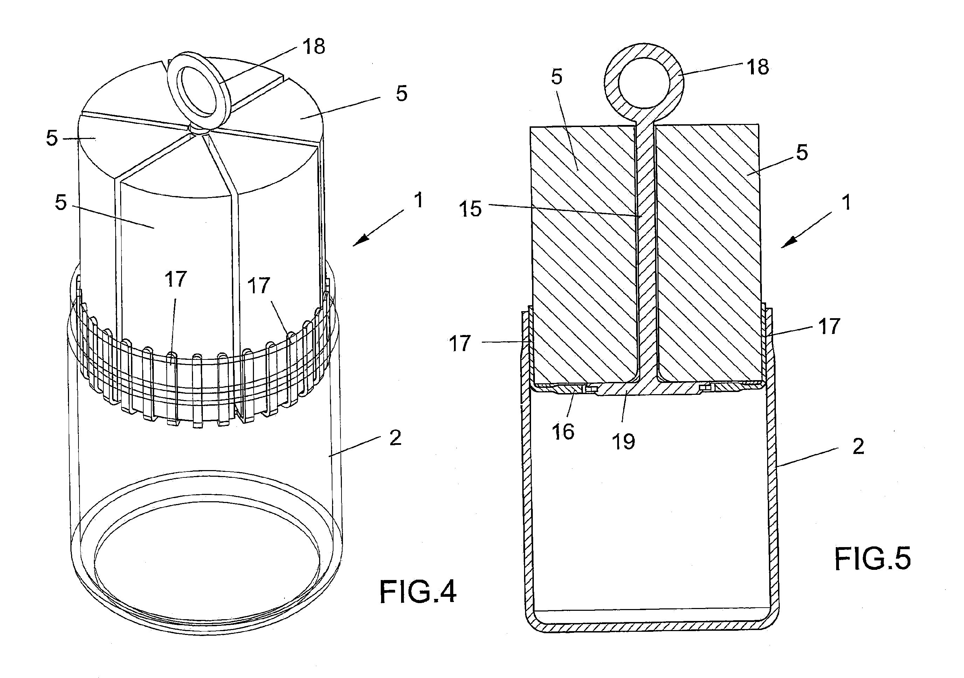

The device 1 is moreover adapted to facilitate the introduction of sliced products 5 into the vessel 2, as shown in Figures 4 and 5.

More specifically, in operation the device 1 is introduced into the vessel 2 and left at a position near the vessel mouth.

Thus, the crown 16 and disc 19 will provide a bearing surface for the product slices 5, which are threaded through the mouth of the vessel 2 only at a starting portion thereof, thereby facilitating such an insertion.

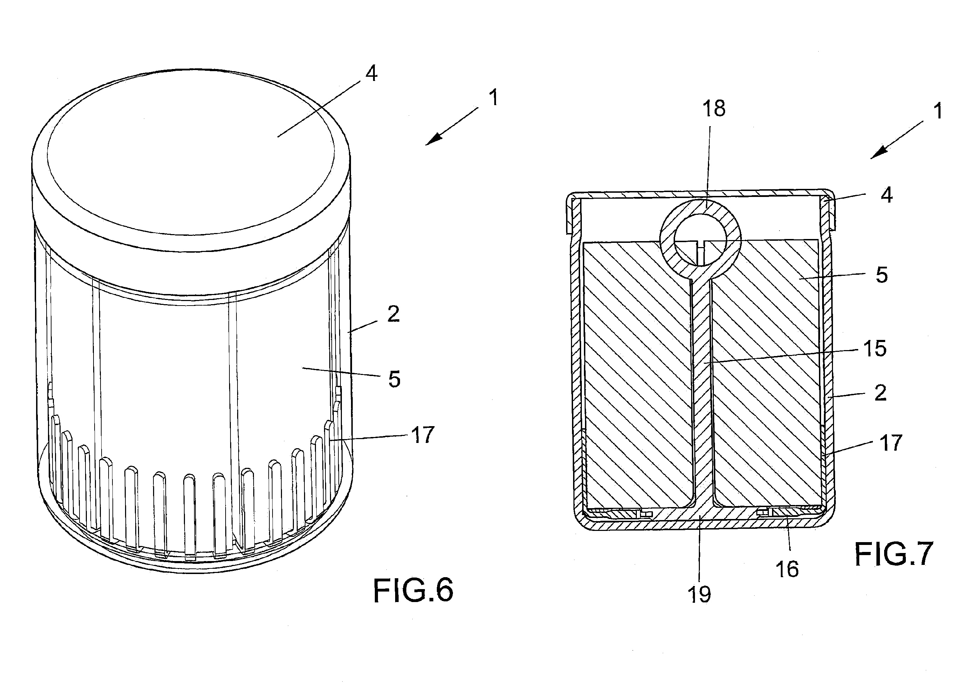

In fact, after having introduced the starting portion of all the product slices 5, it will be possible to push them fully inside the vessel 2, as shown in Figures 6 and 7.

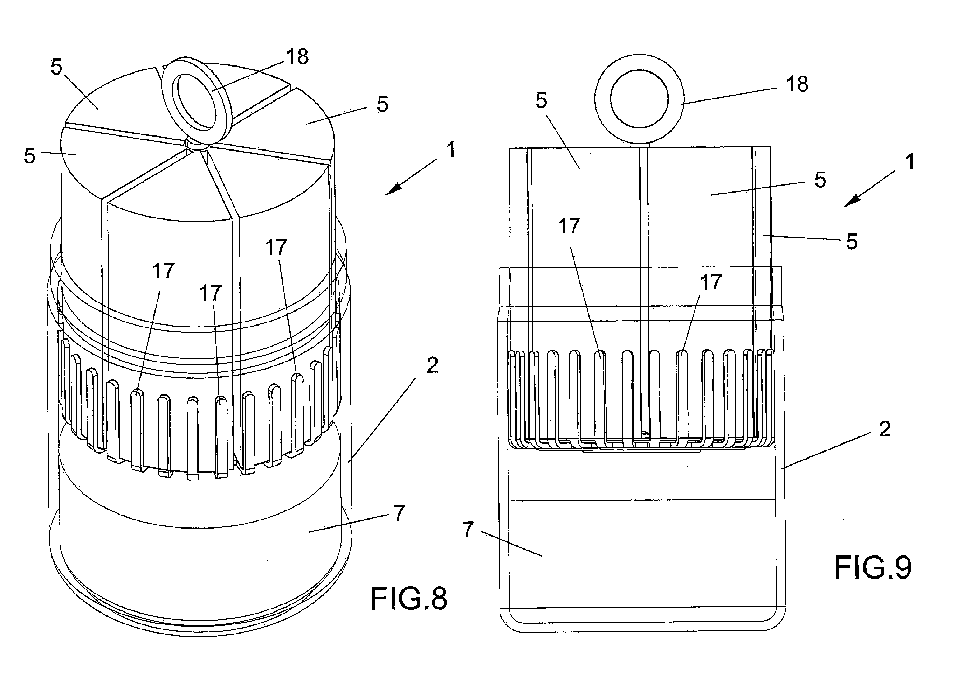

In the removing or withdrawing operating step, shown in Figures 8 and 9, the device 1 is raised together with the sliced product 5, whereas the drained liquid 7 will remain inside the vessel 2.

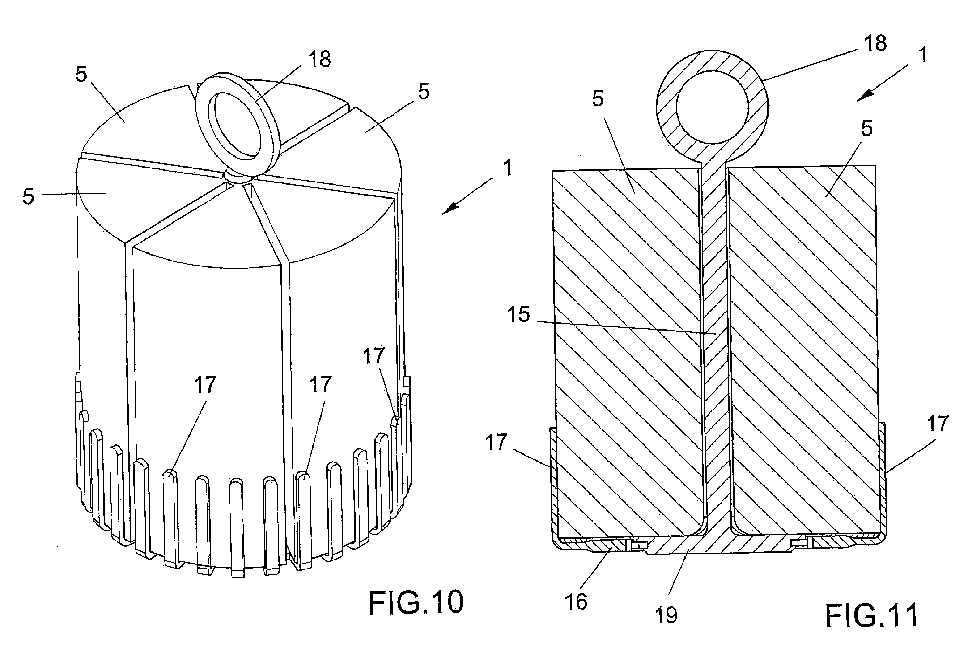

In this connection, it should be apparent that the blades 17 are held in a folded condition even after the full removal of the device 1, as shown in Figures 10 and 11, thereby forming a basket arrangement containing the product 5, which, accordingly, may be easily withdrawn from the vessel 2.

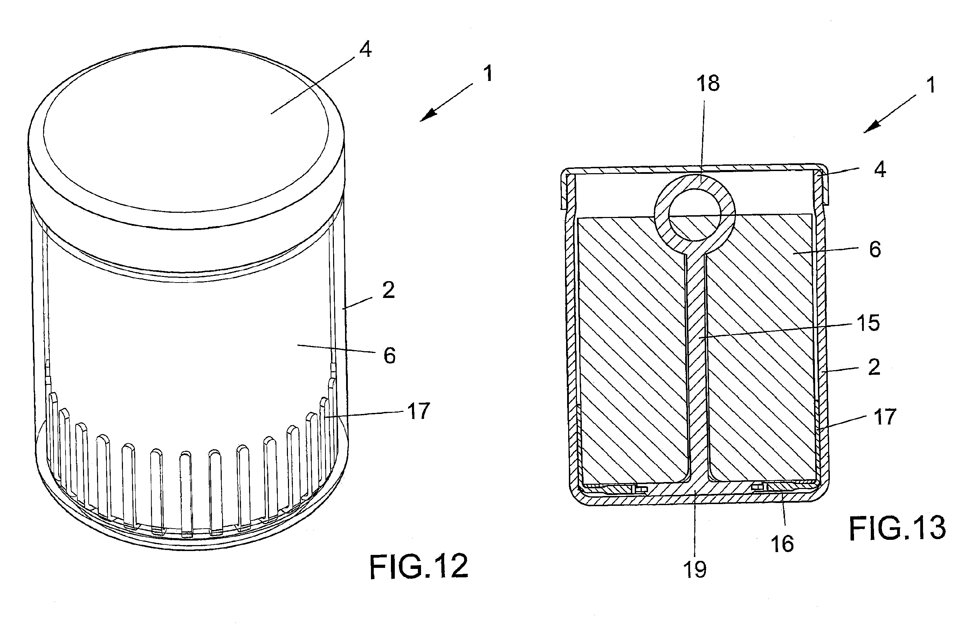

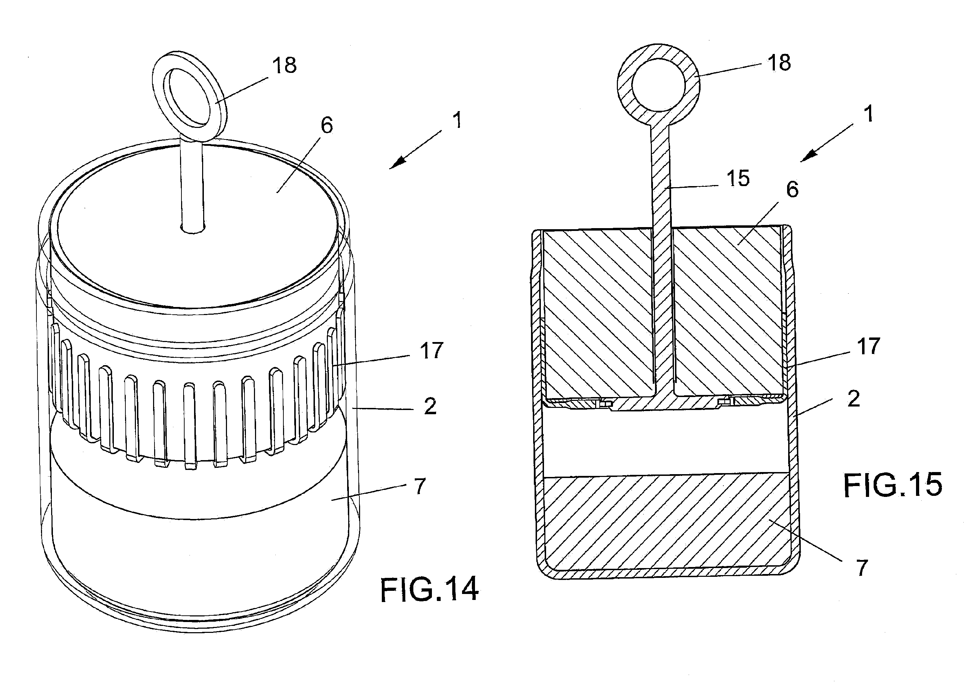

Figures 12, 13, 14 and 15 show the inventive device used for withdrawing or removing loose products 6.

More specifically, such a loose product 6 is raised by the device so as to bring said product near the edge or rim of the vessel 2, thereby it may be easily withdrawn, while leaving the drained liquid 7 on the vessel bottom.

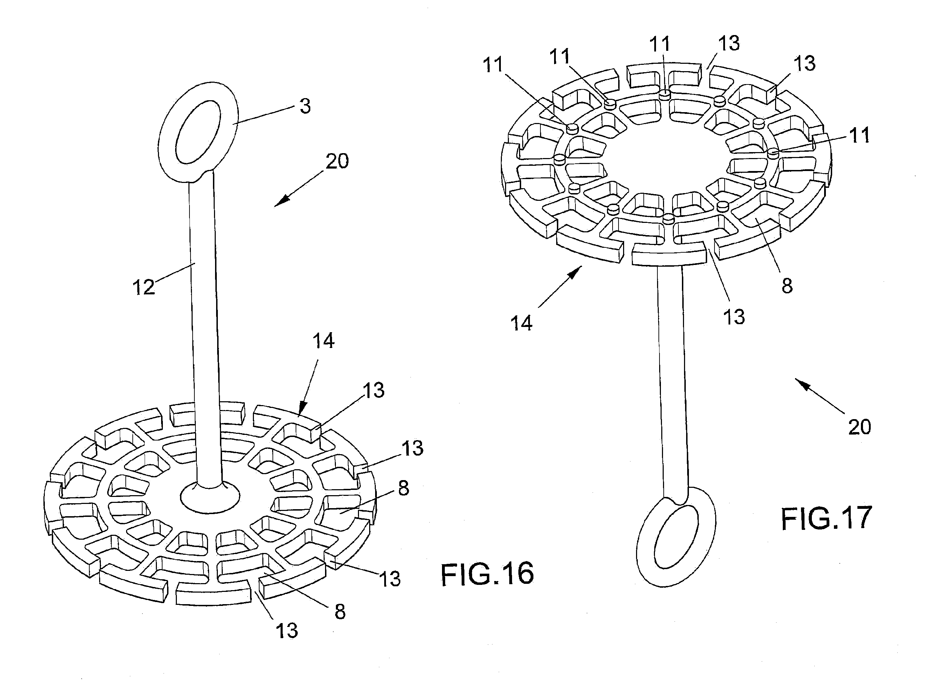

Figures 16 and 17 show the device for taking and removing a product from the vessels, according to a further embodiment of the invention, which has been generally indicated by the reference number 20.

More specifically, the device 20 comprises a perforated plate element 8, 9 which has advantageously the same configuration as the inner portion of a vessel 2, and being associated with a rod 12 having, at a free end portion thereof, a ring 3 or other gripping T-shape element 10, or the like.

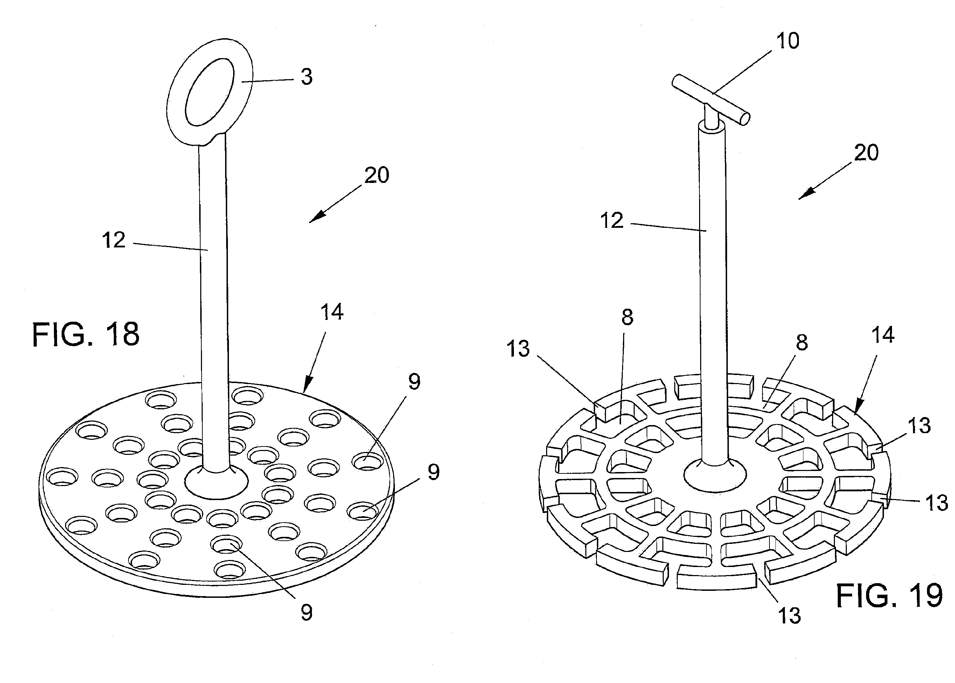

Figures 16, 17 and 19 show a perforated plate element 8 having a configuration different from that of the plate element 9 shown in Figure 18.

More specifically, the vessel 2 is a jar or pot made of glass, or any other suitable material, and the device 20 is introduced into the vessel 2 before introducing the product thereinto.

The product may be of a sliced type 5 or a loose type 6.

On the top portion of the rod 12 is applied a flexible ring element 3, or a flexible T-shape element 10, which is bent as it is pushed by the cover 4, as the vessel 2 is closed.

Upon opening the vessel, the flexible ring 3 or T-shape element 10, which is no longer folded or bent by the cover 4, is raised up to a level higher than that of the edge or rim.

This allows the disc 14 to be raised without introducing into the vessel 2 a raising tool and without making it dirty because of the liquid.

The ring 3 or T-shape element 10 may be a rigid element to prevent it from being bent under the pushing force of the cover 4, as shown in Figures 7, 13 and 15.

Thus, by a suitable tool, for example a fork, to be introduced into the ring 3 or T-shape element 10, it is possible to raise or lift the disc 14 and simultaneously the product 5 or 6.

In case of application to a sliced product 5, the latter will partially exit the vessel, thereby facilitating the gripping of said sliced product 5.

In case of application to a loose product 6, the disc 14 will be raised so as to cause the product to arrive near the edge or rim of the vessel 2, thereby it may be easily gripped.

As the vessel 2 is closed again after having taken part of a loose product 6 or a sliced product 5, the rod 12, pushed by the cover 4, will in turn push the disc 14 towards the bottom of the vessel 2, thereby the product will fall, by gravity, to the bottom of the vessel 2, above the disc 14.

The disc device according to the present invention is advantageously made of a material adapted to provide such a friction with the walls of the vessel 2 sufficient to allow it, upon raising, to be held at the raised position without using an outer force.

Preferably, the device is made of a sufficiently flexible material to be also inserted into vessels 2 having an inlet rim of a size smaller than that of the remaining portion of the vessel, as frequently occurs in glass jars or pots for containing food products.

In such an application, the outer portion of the disc 14 may advantageously comprise a gap 13.

The material flexibility allows, if necessary, to incline the disc 14 and rod 12 to facilitate a removal from a small size vessel 2.

As shown, the disc 14 is provided with openings 8, 9 so sized and arranged as to cause the liquid to leak therethrough, while restraining the product, as the disc is raised.

The above openings 8, 9 allow the contents 5 or 6 to be withdrawn in a drained condition, that is without removing the liquid 7.

The bottom portion of the disc 14 may comprise ridged portions 11 bearing on the bottom of the vessel, to prevent the disc from adhering to the vessel bottom because of a suction cup effect.

It has been found that the invention fully achieves the intended aim and objects.

In fact, the invention has provided a device or system for removing products from a vessel, which is particularly useful for removing or withdrawing oil preserved food products, in a loose or sliced form.

The device according to the present invention may be advantageously used for a broad range of products and may be easily integrated in the existing preparing and packaging lines.

In practicing the invention, the used materials as well as the contingent size and shapes can be any, depending on requirements.

## Claims

1. A device for easily removing a product from a vessel, **characterized in that** said device comprises a rod associated with a flexible supporting element adapted to be introduced into a vessel containing a product either immersed or not in a liquid, said flexible supporting element having such an arrangement as to fit an inner portion of the vessel, said rod including, at a free end portion thereof, a gripping element for raising said device to facilitate a removal of a product while draining off the liquid.

2. A device, according to claim 1, **characterized in that** said rod is associated with a crown, having a plurality of flexible blades, said flexible blades having a size larger than a size of a vessel therewith said device is used.

3. A device, according to claim 1, **characterized in that** said device comprises either one or more pieces of any desired shapes and size and being connected and/or mounted with one another by any suitable connecting method and system.

4. A device, according to claim 1, **characterized in that** said rod has a further end portion thereof associated to a crown and including a disc, formed as a single piece with said rod.

5. A device, according to claim 1, **characterized in that**, as said device is introduced into said vessel, said blades are so folded as to adhere to a vessel wall, thereby increasing a friction between said blades and vessel wall, to allow said device to be easily held raised in an intermediate position, without using an outer force.

6. A device, according to claim 1, **characterized in that** said device is fully withdrawable from said vessel.

7. A device, according to claim 1, **characterized in that** said blades are so arranged as to remain bent even after having fully withdrawn said device from said vessel, thereby forming a basket arrangement containing a product to be easily removed from the vessel.

8. A device, according to claim 1, **characterized in that** said flexible supporting element comprises a perforated plate element, having a same configuration as that of the inner portion of the vessel.

9. A device, according to claim 1, **characterized in that** said gripping element comprises a ring.

10. A device, according to claim 1, **characterized in that** said gripping element comprises a T-shape element.

11. A device, according to claim 1, **characterized in that** said gripping element is bent by a pushing cover closing said vessel; as said vessel is opened said gripping element, which is not folded by the pushing cover, is raised to a level higher than that of a top rim of said vessel, thereby allowing the disc device to be raised without introducing a raising tool into said vessel and without contaminating it by said liquid.

12. A device, according to claim 1, **characterized in that** said gripping element is a rigid non folding element.

13. A device, according to claim 1, **characterized in that** said supporting element is made of a material providing a friction with a wall of said vessel sufficient to hold said device in a raised condition thereof without using an outer force.

14. A device, according to claim 1, **characterized in that** said plate element comprises a plate element gap.

15. A device, according to claim 1, **characterized in that** said plate element comprises a plurality of holes and openings for draining said liquid therethrough, while restraining the product, as the disc device is raised.
